# EUROPEAN PATENT SPECIFICATION

(11) **EP 0 460 314 B1**
(45) Date of publication and mention of the grant of the patent: **14.12.1994**
(21) Application number: 90306208.1
(22) Date of filing: 07.06.1990
(51) Int. Cl.: H04N 13/04, G09F 19/12

(54) **Display medium**
Anzeigemittel
Moyen d'affichage

(43) Date of publication of application: 11.12.1991
(73) Proprietor: International Business Machines Corporation, Armonk, N.Y. 10504 (US)
(72) Inventor: Woodwark, John Ross, Winchester, Hampshire, SO22 5LB (GB)
(74) Representative: Burt, Roger James, Dr.

(56) References cited:
- FR-A- 2 551 559
- US-A- 3 643 361
- US-A- 4 128 324
- IEEE 1989 NATIONAL AEROSPACE AND ELECTRONICS CONFERENCE, 22nd - 26th May 1989,vol. 2, pages 596-603, New York, US; W.J. KNOX: "Shading models for realistic image synthesis"
- PROCEEDINGS SIGGRAPH 1986, Dallas, 18th - 22nd August 1986, vol. 20, no. 4,pages 133-142; D.S. IMMEL et al.: "A radiosity method for non-diffuse environments"

## Description

The invention relates to a display medium for displaying 2-dimensional (2-D) representations of 3-dimensional (3-D) scenes with a simulated 3-D effect.

Prior art ways of providing a 3-D effect in a 2-D image include stereoscopy and holography.

Both these methods of producing a 3-D effect have severe disadvantages. Stereoscopy necessitates the wearing of special glasses by the viewer and holography involves the use of expensive laser light and perhaps the necessity of illuminating the hologram using coherent radiation. In addition it is very difficult to make large holograms.

These disadvantages preclude the use of such techniques in such commercially important applications as large advertising posters in public places such as airports, shopping centres or the like.

It is an object of the present invention to provide a 2-D display medium with a simulated 3-D effect which neither requires illumination by a special type of light nor the wearing of special glasses by the viewer and which allows the production of large scale images at a reasonable cost.

A display medium is known comprising means for displaying chrominance and/or luminance information providing a 2-D image representing a 3-D scene, means for simulating specular reflection of light from the 3-D scene by causing, at each one of a plurality of locations, light leaving the display medium to have maxima in its intensity as a function of direction for at least one predetermined direction, each predetermined direction corresponding to a direction in which light would be specularly reflected from the part of the 3-D scene represented by the 2-D image at that location. See for example US-A-4,128,324.

As a viewer of shiny objects moves specular reflections of light sources illuminating the objects appear to move on the surface of the objects. If specular reflections of light from fixed light sources from shiny objects are simulated then a degree of three-dimensional effect in a 2-D image can be achieved provided that there is some head movement from the viewer and even if the viewer keeps his or her head still, there is still a stereo cue provided by the rather different specular reflections that reach each of his or her eyes.

In order to simulate specular reflections in a 2-D representation of a 3-D scene it is necessary to ensure that bright light comes from the surface of the 2-D representation in the directions that it would do if it were really a specular reflection from lighting in the scene.

The directions in which light from light sources at known locations is specularly reflected from a known point on a 3-D surface may be calculated from the surface normal at that point. Computer graphics representations of 3-D objects contain information about the surface normals of the objects represented. Therefore in a 2-D representation of a 3-D scene generated through the use of computer graphics it is straightforward to obtain the normals to the surfaces visible in the 2-D representation. It is therefore possible to obtain information regarding the directions in which light specularly reflected from objects depicted in a 2-D representation of a 3-D scene would leave the surfaces of the objects for each point on the visible surfaces of the objects.

If the light sources illuminating the objects depicted in a picture are fixed then for each point in the picture we can calculate the directions in which the specularly reflected light would leave the surface from the object depicted by the picture. There is one such direction for each light source and for each point on the shiny surface.

According to the invention a display medium of the above type is characterised in that the means for simulating specular reflection of light from the 3-D scene comprises a plurality of layers, the light leaving the display medium at each of the plurality of locations passing through spots on the layers, the spots being more light-transmitting than the layer in the area surrounding the spot, the positions of the spots in each layer relative to the positions of corresponding spots in adjacent layers defining paths for the light passing through the display medium, which paths point in each of the predetermined directions.

In this form of the invention the 2-D picture is made up of a number of layers of film which allow light to pass through. The absorption of each layer is calculated to give the correct overall colours. A number of tiny holes, or dots of transparent film, are made in each layer. These dots are displaced on consecutive layers in such a way that, at each point in the picture, a line through the dots on each layer is aligned with the direction in which light which has been specularly reflected from the 3-D scene would leave the surface from that point. When the viewer is in a position where he expects to see specular reflection from that point of the surface, he will see, not true specular reflection, but light shining through from behind the picture. This simulates a specular reflection at that point.

Thus, for some range of viewing positions, a simulation of specular reflections, and therefore a 3-D effect, is achieved.

According to a preferred feature of the invention the spots are transparent, colourless portions of the layers. This enables specular reflections from white light sources to be simulated.

Left-right stereo effects are more important for a viewer than up-down stereo effects. Therefore, in an advantageous form of the invention a first dimension of the spots is smaller than a second orthogonal dimension of the spots.

According to another preferred feature of the invention, for each particular location, light leaving the surface of the picture has a maximum in its intensity for one particular direction allowing specular reflection from a single light source to be simulated.

The particular locations can be arranged on the 2-D surface of the medium in a regular grid or they can have a random arrangement.

The display medium finds particular, but not exclusive, application in a placard comprising at least one portion made from the display medium or in a display system comprising means for storing information regarding a 3-D scene and a display device comprising a screen made of a display medium as claimed in any preceding claim, the display device being for reproducing the 3-D scene.

According to another aspect of the invention there is provided apparatus for controlling the manufacture of the display medium comprising: means for storing information regarding a 3-D scene; means for superimposing information regarding the directions in which light is specularly reflected from the 3-D scene on chrominance and/or luminance information regarding a 2-D image representing the 3-D scene.

The means for superimposing information regarding the directions in which light is specularly reflected from the 3-D scene on chrominance and/or luminance information regarding a 2-D image representing the 3-D scene can comprise: data processing means; a display device comprising a plurality of pixels for selectively displaying chrominance and luminance information regarding the 2-D image under the control of the data processing system; a camera comprising a photographic plate, for photographing the 2-D image, for forming one layer of the display medium; a mask, selectively placed in the optical path between the display device and the photographic plate, the mask having a plurality of light-transmitting portions; positioning means under the control of the data processing means for positioning the mask in the lateral direction with respect to the optical path, the data processing means selectively switching each pixel to full brightness when the mask is at a predetermined position corresponding to the pixel, for selective further exposure of the photographic plate.

In an alternative form of this aspect of the invention means for superimposing information regarding the directions in which light is specularly reflected from the 3-D scene on chrominance and/or luminance information regarding a 2-D image representing the 3-D scene comprises: data processing means; a display device; a camera comprising a photographic plate for photographing the display device; and wherein the data processing means comprises: means for selectively displaying chrominance and luminance information regarding sections of the 2-D image on the display device; and means for selectively causing spots to be displayed at predetermined locations on the display device.

According to yet another aspect of the invention there is provided a method for making the display medium the method comprising the steps of;
(a) making a 2-D representation of chrominance and/or luminance information regarding a 3-D scene in a first layer;
(b) superimposing a pattern of light-transmitting portions on the first layer;
(c) making 2-D representations of chrominance and/or luminance information regarding the 3-D scene on subsequent layers;
   and (d) superimposing light-transmitting portions on the subsequent layers such that, when the layers are assembled together, the positions of the light-transmitting portions in one layer relative to their positions in adjacent layers define paths for light passing through the layers, the paths pointing in predetermined directions corresponding to directions in which light from a light source illuminating the 3-D scene would be specularly reflected.

In a preferred form of the invention the method further comprises the steps of dividing the 2-D representation into sections, performing steps (a) to (d) for each section, and assembling the sections to form the medium.

The invention will be further described hereinbelow with reference to the following figures wherein,
figure 1 is a schematic diagram showing the principle of an embodiment of the invention,
figure 2 is a diagram of an apparatus for making a display medium according to a first embodiment of the invention,

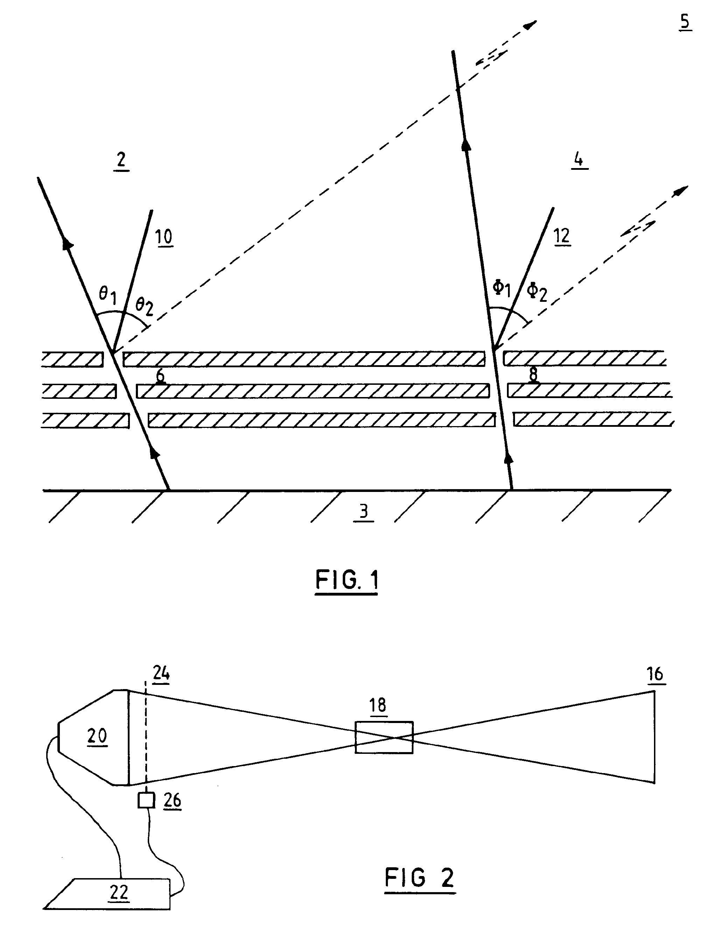

An embodiment of the invention is illustrated schematically by figure 1. Two locations, 2 and 4, are shown where bright light is constrained to leave the surface of the 2-D image in different predetermined directions from a light source, 3, behind the picture, providing parallel illumination. The light source may be, for example, an array of fluorescent tubes. Specular reflections of a virtual light source located at 5 (at infinite distance from the object) from the objects depicted in the picture are simulated by light from the light source, 3, behind the picture passing through the sets of spots, 6 and 8, in a trilayered structure. The amount by which the positions of the spots are offset between one layer and its adjacent layers is calculated from the direction of the surface normals 10 and 12 so that the angles Θ₁ = Θ₂ and Φ₁ = Φ₂.

In these embodiments the images are assumed to be 2-D computer graphical representations of 3-D scenes. Using some computer graphics systems it is possible to produce 2-D image information which contains details of the surface normals of the visible surfaces of the 3-D scene. From the information regarding the surface normals the viewing direction may be calculated in which the specular reflection would be a maximum at each point. Therefore the required offsets for the locations of the spots in successive layers of the layered structure may be obtained.

Computer graphics pictures are not very high resolution, typically 1024 x 1024 pixels. If the spots were made the size of the pixels, then they would be very noticeable on the top layer, and subsequent layers would have to be spaced far apart to get any but the coarsest variation in angle of specular reflection. Therefore in the embodiments of the invention the spots are smaller than the pixel size.

In the following two ways of creating pictures according to the invention from such computer graphical data within a photographic process are described. For clarity, the 3-D scene is assumed to be illuminated by a single, white light source and it is specular reflections of this light source from the object or objects making up the scene that are to be simulated.

Figure 2 is a diagram of an apparatus for making a picture, via a photographic process, according to a first embodiment of the invention. The apparatus consists of a film plate, 16, and a lens arrangement, 18, which could be a conventional camera. The camera is arranged to photograph a display device, 20, which may display pixel-based graphics generated by a data processing system, 22. Colour filters (not shown) may be flipped, in a way known in the art, into and out of the optical path between the display device and the camera. There is also an auxiliary layer of film or an etched metal plate, 24, which acts as a mask having a pattern of holes or transparent portions finer than that of the pixels of the display. The holes on this plate could be in a regular pattern, or perhaps in a pseudo-random arrangement. This plate is then mounted in the photographic device in such a way that it can be flipped into and out of the optical path, it is in the focal plane of the film and that its position perpendicular to the axis of the camera can be finely adjusted by positioners, 26, under the control of the data processing system. The positioners, 26, may be, for example, piezo-electric transducers.

The main image in the first layer is made in the usual way, by exposing the film to the red, green and blue parts of the picture in turn, with the auxiliary plate, 24, flipped out of the optical path, appropriate colour filters flipped into the optical path and the brightness of the image corrected so as to give the correct overall brightness when the layers of the layered structure are assembled together. To make the transparent spots the auxiliary plate is then brought into position, with the screen switched onto full white and the colour filters flipped out of the optical path. The pattern of holes will be superimposed onto the film as clear transparent dots. That completes the top layer of the picture.

It should be noted that the auxiliary plate could be located just in front of the film. However this would entail the construction of a dedicated camera and in any case the auxiliary plate would inevitably then be slightly out of the focal plane. The auxiliary plate being at the display screen as shown in figure 2 has the advantage that the auxiliary plate can be exactly in the focal plane with the screen itself slightly out of the focal plane. This gives better results since the spots are smaller than the pixel size of the image.

To make the second layer a second film plate is then exposed to red, green and blue in the same way, and the auxiliary plate then brought into position. In this case the piezo-electric transducers are used to select a series of different positions for the plate, on a 2-D grid. Each of the positions of the plate on the 2-D grid corresponds to the arrays of spots on the two layers having a certain offset which determines a possible direction in which light may leave the surface. When the direction required at a particular pixel corresponds to the direction selected by the plate that pixel is illuminated producing a clear dot on the second layer of the picture in such a way that if the two layers are assembled together light passing through the corresponding spot on the first layer from that part of the picture leaves the surface in the required direction. The process is finished once all the pixels have been selected for each direction.

If further layers are required, this process is repeated for each layer, with a corresponding increased movement of the positioners to give the increased offset of the spots.

Provided that the pattern on the plate is finer than the pixel pattern, a particular alignment between spots and pixels is not necessary. Pixel alignment between layers need only be approximate. When the layers are finally assembled this will be on the basis of the spot pattern, not the pixels. The pixels do not need to match up exactly for an acceptable image. When the plate is moved for layers subsequent to the first, the 2-D grid of positions can be a relatively fine one, and the spots may overlap for consecutive positions of the plate, as more than one pixel will not be illuminated simultaneously. This would allow a fine variation of reflecting angle over a reasonable range of viewing positions. There is considerable advantage in not trying to accommodate highly off-axis viewing positions which would not in any case be satisfactory because of foreshortening of the picture.

According to a second embodiment of the invention the 2-D image is made in several sections. Apparatus for making a picture according to this method are as shown in figure 2, except the auxilliary mask and the positioners are not necessary. It consists of a display device 20, appropriate colour filters (not shown in Fig 2), a lens system 18, and a photographic plate, 16. The apparatus is under the control of a data processing system, 22.

A pixel-based 2-D image of a 3-D scene, stored in the data processing system, is divided into a number of sections.

These sections are displayed in turn enlarged to fill the whole of the display device screen.

A dot pattern corresponding to each layer of each section is also stored in or calculated by the data processing system. this pattern is at the original screen resolution. For example if the original image is made up of 1024x1024 pixels then it could be split up into 16 sections of 256x256 pixels. These could be displayed in turn with each large pixel taking 4x4 actual pixels. The spots would be superimposed at actual pixel size thus achieving the necessary difference in scale. This would mean that the smallest dot size would be 1/4 of the original pixel resolution. For each layer the dots are suitably displaced in position so that when the layers are assembled together they provide the paths through the medium in the directions corresponding to the specular reflections from the 3-D scene. The displacements are calculated by the data processing system from the information regarding the normals of the visible surfaces of the 3-D scene.

A separate film plate is used for each layer of each section. The dot pattern and the image may be exposed to the photographic film at the same time or in turn. The important thing is that the dots be superimposed on the photographic film for each layer of each section.

All of these steps are performed under the control of a data processing system. At the end of the process the sections of the image are assembled to give a final complete picture.

It should be noted that for a display media according to the invention the dots do not have to be of any particular shape. In particular they do not have to be circular. Indeed as left-right stereo effects are much more important than up-down stereo effects for a viewer it may be advantageous to use dots which are in fact short vertical stripes, which are taller than they are wide. This is within the scope of the invention.

Multiple lights illuminating the 3-D scene may also be modelled, in which case there would be multiple specular reflections from each point. These can be modelled by having one dot on the frontmost film and multiple differently positioned dots on the underlying layers corresponding to the different specular reflections. In the above embodiment this corresponds to there being more than one position of the grid for which each pixel is lit up.

Although specular reflections are commonly white, coloured illumination of the 3-D scene would produce coloured reflections. This may be modelled by replacing one or more of the aligned clear dots with an appropriate colour filter. This would require modifications to the processes outlined above, for example by appropriate use of the colour filters and the auxiliary plate together in the first embodiment or by use of a coloured dot pattern in the second embodiment. This is within the scope of the invention.

Real specular reflections do not occur in a single direction only. There is a function which determines how quickly intensity falls off as a function of angle Θ from the direction in which it is a maximum. This function is commonly approximated in computer graphics as cosⁿΘ. The system of layers and dots will produce roughly the same effect, because as the viewer moves he will see a reducing intensity from a particular track of dots as they move out of alignment. To an extent, less shiny surfaces may be modelled by using larger dots, or layers that are more closely spaced, as this will reduce the attenuating effect of small angular displacements from the true alignment. However, these effects would apply to the whole image. It is possible to use different size holes for different parts of the image to model objects with differing degrees of shininess within the constraints of keeping the base colours stable and avoiding undesirable scale effects.

The dots cannot be made too large, relative to the size of the picture, so that realism, ie the perception of specular reflection as smooth, is maintained. The dots cannot be made too small, because of the effect of diffraction. The combination of these two statements puts a lower limit on picture size. Additionally the dots cannot be placed too close together because of the effect of interference between adjacent tracks of dots. This inevitably occurs but outside the desirable range of viewing angles.

The dots cause a change in the perceived colour of the main image as lit by ambient illumination. In particular white dots will cause its saturation to be reduced and its intensity to be increased. The contrast between the base colour and the dots may be chosen to be adequate to ensure that this effect is small. In more sophisticated implementations the base colours can be corrected to compensate for this. Increasing the number of layers reduces this problem.

There has been described a display medium and a method and apparatus for the manufacture of the display medium wherein a 3-D effect in a 2-D representation of a 3-D scene is achieved by simulating specular reflections from the scene. This simulation is achieved by causing light leaving the 2-D representation to have maxima in its intensity as a function of direction in directions corresponding to specular reflections from the scene.

## Claims

1. Display medium comprising
means for displaying chrominance and/or luminance information providing a 2-D image representing a 3-D scene, and
means for simulating specular reflection of light from the 3-D scene by causing, at each one of a plurality of locations (2, 4), light leaving the display medium to have maxima in its intensity as a function of direction for at least one predetermined direction, each predetermined direction corresponding to a direction in which light would be specularly reflected from the part of the 3-D scene represented by the 2-D image at that location, characterised in that the
means for simulating specular reflection of light from the 3-D scene comprises a plurality of layers, the light leaving the display medium at each of the plurality of locations (2, 4) passing through spots (6, 8) on the layers, the spots being more light-transmitting than the layer in the area surrounding the spot, the positions of the spots in each layer relative to the positions of corresponding spots in adjacent layers defining paths for the light passing through the display medium, which paths point in each of the predetermined directions.

2. Display medium as claimed in claim 1 wherein the spots (6,8) are transparent, colourless portions of the layers.

3. Display medium as claimed in claim 1 or claim 2 wherein a first dimension of the spots is smaller than a second orthogonal dimension of the spots.

4. Display medium as claimed in any preceding claim wherein the plurality of locations are arranged in a regular grid.

5. Display medium as claimed in any of claims 1 to 3 wherein the plurality of locations have a random arrangement.

6. Display medium as claimed in any preceding claim wherein light leaving the surface of the display medium from each of the plurality of locations has a maximum in its intensity for one particular direction.

7. Display system comprising means for storing information regarding a 3-D scene and a display device comprising a screen made of a display medium as claimed in any preceding claim, the display device being for reproducing the 3-D scene.

8. Placard comprising at least one portion made from a display medium as claimed in any of claims 1 to 6.

9. Apparatus for controlling the manufacture of a display medium as claimed in any of claims 1 to 6 comprising:
means for storing information regarding a 3-D scene;
means for superimposing information regarding the directions in which light is specularly reflected from the 3-D scene on chrominance and/or luminance information regarding a 2-D image representing the 3-D scene, said means comprising
data processing means (22);
a display device (20) comprising a plurality of pixels for selectively displaying chrominance and luminance information regarding the 2-D image under the control of the data processing system;
a camera comprising a photographic plate (16) for photographing the 2-D image, for forming one layer of the display medium:
a mask (24), selectively placed in the optical path between the display device and the photographic plate, the mask having a plurality of light-transmitting portions;
positioning means (26) under the control of the data processing means for positioning the mask in the lateral direction with respect to the optical path, the data processing means selectively switching each pixel to full brightness when the mask is at a predetermined position corresponding to the pixel, for selective further exposure of the photographic plate.

10. Apparatus for controlling the manufacture of a display medium as claimed in any of claims 1 to 6 comprising:
means for storing information regarding a 3-D scene;
means for superimposing information regarding the directions in which light is specularly reflected from the 3-D scene on chrominance and/or luminance information regarding a 2-D image representing the 3-D scene, said means comprising
data processing means (22);
a display device (20);
a camera comprising a photographic plate (16), for photographing the display device;
and wherein the data processing means (22) comprises: means for selectively displaying chrominance and luminance information regarding sections of the 2-D image on the display device; and means for selectively causing spots to be displayed at predetermined locations on the display device.

11. Method for making a display medium as claimed in any of claims 2 to 7 the method comprising the steps of;
(a) making, in a first layer, a 2-D photographic representation of chrominance and/or luminance information regarding a 2-D image representing a 3-D scene;
(b) photographically superimposing a pattern of light-transmitting portions on the first layer;
(c) making, on subsequent layers, 2-D photographic representations of chrominance and/or luminance information regarding the 2-D image; and
(d) photographically superimposing light-transmitting portions on the subsequent layers such that when the layers are assembled together, the positions of the light-transmitting portions in one layer relative to their positions in adjacent layers define paths for light passing through the layers, the paths pointing in predetermined directions.

12. A method as claimed in claim 11 which further comprises the steps of dividing the 2-D image into sections, performing steps (a) to (d) for each section, and assembling the sections.

## Patentansprüche

1. Ein Anzeigemittel, umfassend:
ein Mittel zur Anzeige von Chrominanz- und/oder Luminanzinformationen, die ein 2D-Bild bilden, das eine 3D-Szene darstellt, und
ein Mittel zur Simulation einer spiegelnden Reflexion des Lichts aus der 3D-Szene, indem an jeder von mehreren Stellen (2, 4) dafür gesorgt wird, daß Licht, welches das Anzeigemittel verläßt, richtungsabhängig für mindestens eine vorbestimmte Richtung ein Intensitätsmaximum aufweist, wobei jede vorbestimmte Richtung einer Richtung entspricht, in die das Licht von dem Teil der 3D-Szene spiegelnd reflektiert würde, den das 2D-Bild an dieser Stelle darstellt, dadurch gekennzeichnet, daß
das Mittel zur Simulation der spiegelnden Reflexion von Licht aus der 3D-Szene mehrere Schichten umfaßt, wobei das Licht das Anzeigemittel an jeder der mehreren Stellen (2, 4) durch Flecken (6, 8) auf den Schichten verläßt, die Flecken mehr Licht übertragen als die Schicht in der Umgebung des Flecks und die Positionen der Flecken in den einzelnen Schichten im Verhältnis zu den Positionen entsprechender Flecken in benachbarten Schichten für das Licht, das das Anzeigemittel passiert, Wege definieren, die jeweils in die vorbestimmten Richtungen weisen.

2. Ein Anzeigemittel nach Anspruch 1, bei dem die Flecken (6, 8) transparente, farblose Teile der Schichten sind.

3. Ein Anzeigemittel nach Anspruch 1 oder 2, bei dem eine erste Ausdehnung der Flecken kleiner ist als eine zweite, dazu rechtwinklige Ausdehnung der Flecken.

4. Ein Anzeigemittel nach einem der obigen Ansprüche, bei dem mehrere Stellen in einem regelmäßigen Netz angeordnet sind.

5. Ein Anzeigemittel nach einem der Ansprüche 1 bis 3, bei dem die mehreren Stellen beliebig angeordnet sind.

6. Ein Anzeigemittel nach einem der obigen Ansprüche, bei dem Licht, welches die Oberfläche des Anzeigemittels von jeder der mehreren Stellen verläßt, ein Intensitätsmaximum für eine bestimmte Richtung hat.

7. Ein Anzeigesystem, das ein Mittel zum Speichern von Informationen zu einer 3D-Szene und ein Anzeigegerät umfaßt, das einen Bildschirm aus einem Anzeigemittel nach einem der obigen Ansprüche enthält, wobei das Anzeigegerät zur Reproduktion der 3D-Szene dient.

8. Ein Plakat, von dem zumindest ein Teil aus einem Anzeigemittel nach einem der Ansprüche 1 bis 6 besteht.

9. Eine Vorrichtung zur Steuerung der Herstellung eines Anzeigemittels nach einem der Ansprüche 1 bis 6, umfassend:
ein Mittel zur Speicherung von Informationen zu einer 3D-Szene;
ein Mittel zur Überlagerung von Chrominanz- und/oder Luminanzinformationen zu einem 2D-Bild, das die 3D-Szene darstellt, mit Informationen zu den Richtungen, in die Licht von der 3D-Szene spiegelnd reflektiert wird, wobei das Mittel umfaßt:
ein Datenverarbeitungsmittel (22);
ein Anzeigegerät (20) mit mehreren Pixeln zur selektiven Anzeige von Chrominanz- und Luminanzinformationen zu dem 2D-Bild unter der Steuerung des Datenverarbeitungssystems;
eine Kamera mit einer fotografischen Platte (16) zum Fotografieren des 2D-Bildes zur Bildung einer Schicht des Anzeigemittels;
eine selektiv im Strahlengang zwischen Anzeigegerät und fotografischer Platte angebrachte Maske (24) mit mehreren Licht übertragenden Teilen;
ein Positioniermittel (26) unter der Steuerung des Datenverarbeitungsmittels zur Positionierung der Maske in seitlicher Richtung in bezug auf den Strahlengang, wobei das Datenverarbeitungsmittel selektiv jedes Pixel auf volle Helligkeit schaltet, wenn die Maske sich in einer vorbestimmten Position befindet, die dem Pixel entspricht, zur selektiven Weiterbelichtung der fotografischen Platte.

10. Eine Vorrichtung zur Steuerung der Herstellung eines Anzeigemittels nach einem der Ansprüche 1 bis 6, umfassend:
ein Mittel zur Speicherung von Informationen zu einer 3D-Szene;
ein Mittel zur Überlagerung von Chrominanz- und/oder Luminanzinformationen zu einem 2D-Bild, das die 3D-Szene darstellt, mit Informationen zu den Richtungen, in die Licht von der 3D-Szene spiegelnd reflektiert wird, wobei das Mittel umfaßt:
ein Datenverarbeitungsmittel (22);
ein Anzeigegerät (20);
eine Kamera mit einer fotografischen Platte (16) zum Fotografieren des Anzeigegerätes;
und wobei das Datenverarbeitungsmittel (22) umfaßt: ein Mittel zur selektiven Anzeige von Chrominanz- und Luminanzinformationen zu Teilen des 2D-Bildes auf dem Anzeigegerät; und ein Mittel zur selektiven Veranlassung der Anzeige von Flecken an vorbestimmten Stellen auf dem Anzeigegerät.

11. Ein Verfahren zur Herstellung eines Anzeigemittels nach einem der Ansprüche 2 bis 7, das folgende Schritte umfaßt:
(a) Herstellen einer fotografischen 2D-Darstellung von Chrominanz- und/oder Luminanzinformationen zu einem 2D-Bild, das eine 3D-Szene darstellt, in einer ersten Schicht;
(b) fotografisches Überlagern der ersten Schicht mit einem Muster Licht übertragender Teile;
(c) Herstellen fotografischer 2D-Darstellungen von Chrominanz- und/oder Luminanzinformationen zu dem 2D-Bild auf nachfolgenden Schichten; und
(d) fotografisches Überlagern der nachfolgenden Schichten mit Licht übertragenden Teilen, so daß nach dem Zusammensetzen der Schichten die Positionen der Licht übertragenden Teile in einer Schicht im Verhältnis zu ihren Positionen in benachbarten Schichten Wege für den Durchgang des Lichts durch die Schichten definieren, wobei die Wege in vorbestimmte Richtungen weisen.

12. Ein Verfahren nach Anspruch 11, das ferner folgende Schritte umfaßt: Aufteilen des 2D-Bildes in Teile, Durchführen der Schritte (a) bis (d) für jeden Teil und Zusammensetzen der Teile.

## Revendications

1. Moyen d'affichage comprenant
des moyens d'affichage d'informations de chrominance et/ou de luminance fournissant une image en 2-D représentant une scène en 3-D, et
des moyens de simulation de réflexion spéculaire de lumière d'une scène en 3-D en amenant, en chacune des positions d'un ensemble de positions (2, 4), la lumière quittant le moyen d'affichage à avoir un maximum d'intensité en fonction de la direction pour au moins une direction pré-déterminée, chaque direction pré-déterminée correspondant à une direction dans laquelle la lumière serait réfléchie spéculairement par la scène en 3-D représentée par une image en 2-D à cette position, caractérisée en ce que
les moyens pour simuler la réflexion spéculaire de la lumière de la scène en 3-D comprennent un ensemble de couches, la lumière quittant le moyen d'affichage en chaque position d'un ensemble de positions (2, 4) passant à travers des points (6, 8) sur les couches, lesdits points ayant des propriétés de transmission de la lumière supérieures à celles des zones entourant lesdits points, les positions des points dans chaque couche par rapport aux positions correspondantes des points dans les couches adjacentes définissant un trajet de lumière passant à travers le moyen d'affichage lesdits trajets pointant dans chacune des directions pré-déterminées.

2. Moyen d'affichage selon la revendication 1 dans lequel les points (6, 8) sont des parties des couches transparentes sans couleur.

3. Moyen d'affichage selon la revendication 1 ou 2 dans lequel une première dimension des points est inférieure à une seconde dimension orthogonale desdits points.

4. Moyen d'affichage selon l'une des revendications précédentes dans lequel l'ensemble de positions est arrangé selon une grille régulière.

5. Moyen d'affichage selon l'une quelconque des revendications 1 à 3 dans lequel l'ensemble des positions est disposé de façon aléatoire.

6. Moyen d'affichage selon l'une quelconque des revendications précédentes dans lequel la lumière quittant la surface du moyen d'affichage de chacune des positions de l'ensemble de positions offre un maximum d'intensité dans une direction particulière.

7. Système d'affichage comprenant des moyens de stockage d'informations concernant une scène en 3-D et un dispositif d'affichage comprenant un écran utilisant un moyen d'affichage selon l'une des revendications précédentes, le dispositif d'affichage permettant la reproduction de scènes en 3-D.

8. Tableau comprenant au moins une partie réalisée à l'aide d'un moyen d'affichage selon l'une des revendications 1 à 6.

9. Dispositif permettant de contrôler la fabrication d'un moyen d'affichage selon l'une des revendications 1 à 6 comprenant :
des moyens de stockage d'informations concernant une scène en 3-D ;
des moyens de superposition d'informations concernant les directions dans lesquelles la lumière est réfléchie spéculairement à partir d'une scène en 3-D en informations de luminance et/ou chrominance concernant une image en 2-D représentant la scène en 3-D lesdits moyens comprenant
des moyens de traitement de données (22) ;
un dispositif d'affichage (20) comprenant un ensemble de pixels permettant d'afficher sélectivement des informations de chrominance et luminance concernant l'image en 2-D sous le contrôle du système de traitement de données ;
une caméra comprenant une plaque photographique (16) pour photographier l'image en 2-D, pour former une couche du moyen d'affichage ;
un masque (24), placé de façon sélective sur le trajet optique entre le dispositif d'affichage et la plaque photographique, le masque comportant un ensemble de parties transmettant la lumière ;
des moyens de positionnement (26) sous le contrôle des moyens de traitement de données destinés à positionner le masque dans la direction latérale par rapport au trajet optique ; les moyens de traitement de données commutant de façon sélective chaque pixel pour une brillance totale lorsque le masque est à une position pré-déterminée correspondant au pixel, pour exposition sélective de la plaque photographique.

10. Dispositif de contrôle de la fabrication d'un moyen d'affichage selon l'une quelconque des revendications 1 à 6 comprenant :
des moyens de stockage d'informations concernant la scène en 3-D ;
des moyens de superposition d'information concernant les directions dans lesquelles la lumière est réfléchie spéculairement à partir de la scène en 3-D en informations de chrominance et/ou de luminance concernant l'image en 2-D représentant la scène en 3-D, lesdits moyens comprenant
des moyens de traitement de données (22) ;
un dispositif d'affichage (20) ;
une caméra comprenant une plaque photographique (16) pour photographier le dispositif d'affichage ;
et dans lequel les moyens de traitement de données (22) comprennent : des moyens pour afficher de façon sélective des informations de chrominance et de luminance concernant les parties de l'image en 2-D sur le dispositif d'affichage ; et des moyens pour réaliser de façon sélective l'affichage de points en des endroits pré-déterminés sur le dispositif d'affichage.

11. Procédé de réalisation d'un moyen d'affichage selon l'une des revendications 2 à 7, ledit procédé comprenant les étapes suivantes :
(a) réalisation, dans une première couche, d'une représentation photographique en 2-D d'informations de chrominance et/ou de luminance concernant une image en 2-D représentant la scène en 3-D ;
(b) superposition photographique d'un schéma de parties transmettant de la lumière sur la première couche.
(c) réalisation, sur des couches suivantes, de représentations photographiques en 2-D d'informations de chrominance et/ou luminance concernant l'image en 2-D ; et
(d) superposition photographique de parties transmettant la lumière sur des couches suivantes de façon telle que lorsque les couches sont assemblées, les positions des parties transmettant la lumière sur une couche par rapport à leurs positions sur les couches adjacentes définissent un trajet de la lumière passant à travers les couches, les trajets pointant dans des directions pré-déterminées.

12. Procédé selon la revendication 11 comprenant en outre les étapes de division de l'image en 2-D en sections, réalisation des étapes (a) à (d) pour chaque section et assemblage des sections.
